# EUROPÄISCHE PATENTSCHRIFT

(11) **EP 3 489 712 B1**
(45) Veröffentlichungstag und Bekanntmachung des Hinweises auf die Patenterteilung: **03.01.2024**
(21) Anmeldenummer: 18206908.8
(22) Anmeldetag: 19.11.2018
(51) Int. Cl.: G01S 7/03, G01S 7/35, G01S 13/931, G01S 13/34, G01S 13/87

(54) **RADARSYSTEM UND VERFAHREN ZUM BETREIBEN EINES RADARSYSTEMS**
RADAR SYSTEM AND METHOD FOR OPERATING THE SAME
SYSTÈME RADAR ET PROCÉDÉ DE FONCTIONNEMENT D'UN SYSTÈME RADAR

(30) Priorität: 28.11.2017 DE 102017221257
(43) Veröffentlichungstag der Anmeldung: 29.05.2019
(73) Patentinhaber: Volkswagen AG, 38440 Wolfsburg (DE); Audi AG, 85045 Ingolstadt (DE); Sicoya GmbH, 12489 Berlin (DE)
(72) Erfinder: Schneider, Thomas, 14552 Michendorf (DE); Schöbel, Jörg, 38124 Braunschweig (DE); Schwartau, Fabian, 38118 Braunschweig (DE); Preußler, Stefan, 38118 Braunschweig (DE); Rhee, Hanjo, 10439 Berlin (DE); Scheytt, Christoph, 46284 Dorsten (DE); Schwenkert, Michael, 85051 Ingolstadt (DE); Thorsten, Bagdonat, 38106 Braunschweig (DE); Kurz, Heiko, 30177 Hannover (DE)
(74) Vertreter: Zucker, Volker

(56) Entgegenhaltungen:
- EP-A2- 1 231 672
- DE-B3-102016 210 771
- US-A1- 2014 022 119
- BI XIAOWEN ET AL: "Research on technology of ROF using in radar", PROCEEDINGS OF SPIE; [PROCEEDINGS OF SPIE ISSN 0277-786X VOLUME 10524], SPIE, US, Bd. 10322, 23. Januar 2017 (2017-01-23), Seiten 103222B-103222B, XP060081867, DOI: 10.1117/12.2265490 ISBN: 978-1-5106-1533-5

## Beschreibung

Die Erfindung betrifft ein Radarsystem und ein Verfahren zum Betreiben eines Radarsystems. Ferner betrifft die Erfindung eine Zentraleinheit, eine Radarsendeeinheit und eine Radarempfangseinheit eines solchen Radarsystems.

Im Bereich der passiven Sicherheitssysteme in Kraftfahrzeugen, sowie für das autonome Fahren in Stufe 4 und 5 ist die Unterscheidbarkeit der Verkehrsteilnehmer sowohl für den Schutz der Insassen als auch für den Schutz der anderen Verkehrsteilnehmer von besonderer Bedeutung. Hierzu ist eine sichere Umfelderfassung notwendig. Um diese zu garantieren, muss das Umfeld des Kraftfahrzeugs mit möglichst hoher Auflösung in allen drei Raumdimensionen erfasst werden. Moderne Kamera- und LIDAR-Systeme sind in der Lage, diese Umfelderfassung zu gewährleisten, werden jedoch in ihrer Qualität beeinflusst oder versagen gänzlich bei schlechten Sichtverhältnissen wie im Falle von Nebel, Schnee oder in der Dunkelheit. Radarsensoren unterliegen diesen Limitierungen hingegen nicht, müssen zur hochaufgelösten dreidimensionalen Bildgebung jedoch in einem Array mit einer Vielzahl von Sensoren angeordnet werden.

Darüber hinaus müssen die einzelnen Sensoren in einem solchen Array bezüglich ihrer Sende- und Empfangszeiten synchronisiert werden. Eine solche Synchronisation ist technisch äußerst anspruchsvoll. Daher ist es von Vorteil, wenn die einzelnen Radarsensoren so klein, einfach, flexibel, fehlertolerant, robust und preiswert wie möglich sind. Zu diesem Zweck sollte so wenig Elektronik wie möglich auf dem Radarsensor selbst verbaut sein, und die digitale Datenverarbeitung zentral innerhalb einer zentralen Steuerungseinheit geschehen.

Problematisch ist bei diesen Zielvorgaben jedoch eine Übertragung des Sende- und Empfangssignals der einzelnen Radarsensoren. So beträgt die Frequenz des zu übertragenen Signals bei einer gewählten Radarträgerfrequenz von 78 GHz beispielsweise ca. 19,5 GHz. Eine elektrische Übertragung eines solchen Signals kann dann eine Dämpfung von mehreren dB zur Folge haben.

Aus der US 2014/0022119 A1 ist ein Radarsystem bekannt, umfassend mindestens eine Radarsendeeinheit, mindestens eine Radarempfangseinheit, eine Zentraleinheit und mindestens eine Glasfaser, wobei die mindestens eine Radarsendeeinheit und die mindestens eine Radarempfangseinheit zumindest abschnittsweise über die mindestens eine Glasfaser mit der Zentraleinheit verbunden sind. Dabei umfasst die Zentraleinheit eine zentrale optische Sendeeinheit, welche derart ausgebildet ist, ein optisches Radartreibersignal bereitzustellen und dieses in die mindestens eine Glasfaser einzukoppeln. Weiter umfasst die mindestens eine Radarsendeeinheit eine optische Empfangseinheit und einen Radarsender, wobei die optische Empfangseinheit derart ausgebildet ist, das optische Radartreibersignal über die mindestens eine Glasfaser zu empfangen und in ein elektrisches Radartreibersignal umzuwandeln und dieses zum Antreiben des Radarsenders bereitzustellen. Die Radarempfangseinheit umfasst einen Radarempfänger, einen Mischer und eine optische Modulationseinheit, wobei der Mischer derart ausgebildet ist, ein von dem Radarempfänger empfangenes Radarrechensignal mit dem elektrischen Radartreibersignal zu mischen.

Ähnliche Radarsysteme sind aus der EP 1 231 672 A2 und dem Fachartikel "Bi XIAOWEN et al.: Research on technology of ROF using in radar, PROCEEDINGS OF SPIE ISSN 0277-786X Volume 10322", XP60081867. bekannt.

Aus der DE 10 2016 210 771 B3 ist ein gattungsgemäßes Radarsystem bekannt.

Der Erfindung liegt das technische Problem zu Grunde, ein Radarsystem und ein Verfahren zum Betreiben eines Radarsystems zu schaffen, bei denen eine Signalübertragung verbessert ist.

Die technische Aufgabe wird erfindungsgemäß durch ein Radarsystem mit den Merkmalen des Patentanspruchs 1 und ein Verfahren mit den Merkmalen des Patentanspruchs 8 gelöst. Vorteilhafte Ausgestaltungen der Erfindung ergeben sich aus den Unteransprüchen.

Insbesondere wird ein Radarsystem geschaffen, umfassend mindestens eine Radarsendeeinheit, mindestens eine Radarempfangseinheit, eine Zentraleinheit, und mindestens eine Glasfaser, wobei die mindestens eine Radarsendeeinheit und die mindestens eine Radarempfangseinheit zumindest abschnittsweise über die mindestens eine Glasfaser mit der Zentraleinheit verbunden sind, wobei die Zentraleinheit eine zentrale optische Sendeeinheit umfasst, welche derart ausgebildet ist, ein optisches Radartreibersignal bereitzustellen und dieses in die mindestens eine Glasfaser einzukoppeln, und wobei die mindestens eine Radarsendeeinheit eine optische Empfangseinheit und einen Radarsender umfasst, wobei die optische Empfangseinheit derart ausgebildet ist, das optische Radartreibersignal über die mindestens eine Glasfaser zu empfangen und in ein elektrisches Radartreibersignal umzuwandeln und dieses zum Antreiben des Radarsenders bereitzustellen, wobei die mindestens eine Radarempfangseinheit einen Radarempfänger, einen Mischer und eine optische Modulationseinheit umfasst, wobei der Mischer derart ausgebildet ist, ein von dem Radarempfänger empfangenes Radarechosignal mit dem elektrischen Radartreibersignal zu mischen, und wobei die Modulationseinheit derart ausgebildet ist, das gemischte Signal auf das optische Radartreibersignal aufzumodulieren und in die mindestens eine Glasfaser einzukoppeln, und wobei die Zentraleinheit ferner eine zentrale optische Empfangseinheit und eine Auswerteeinheit umfasst, wobei die Auswerteeinheit derart ausgebildet ist, das von der zentralen optischen Empfangseinheit empfangene aufmodulierte Signal auszuwerten und eine hieraus abgeleitete Radarinformation auszugeben.

Ferner wird ein Verfahren zum Betreiben eines Radarsystems zur Verfügung, umfassend die folgenden Schritte: Erzeugen und Bereitstellen eines optischen Radartreibersignals mittels einer zentralen optischen Sendeeinheit einer Zentraleinheit, Übermitteln des optischen Radartreibersignals mittels mindestens einer Glasfaser an mindestens eine Radarsendeeinheit, Empfangen des optischen Radartreibersignals und Umwandeln des optischen Radartreibersignals in ein elektrisches Radartreibersignal mittels einer optischen Empfangseinheit der mindestens einen Radarsendeeinheit, Antreiben des Radarsenders der Radarsendeeinheit mit dem elektrischen Radartreibersignal, Empfangen eines Radarechosignals mittels eines Radarempfängers einer Radarempfangseinheit, Mischen des empfangenen Radarechosignals mit dem elektrischen Radartreibersignal in einem Mischer der Radarempfangseinheit, Aufmodulieren des gemischten Signals auf das optische Radartreibersignal mittels einer Modulationseinheit der Radarempfangseinheit, Übermitteln des aufmodulierten Signals über die mindestens eine Glasfaser an die Zentraleinheit, Empfangen des aufmodulierten Signals mittels einer zentralen optischen Empfangseinheit der Zentraleinheit, Auswerten des empfangenen aufmodulierten Signals mittels einer Auswerteeinheit der Zentraleinheit, Ausgeben einer hieraus abgeleiteten Radarinformation.

Weiter wird eine Zentraleinheit zur Verwendung in dem vorgenannten Radarsystem geschaffen, wobei die Zentraleinheit eine zentrale optische Sendeeinheit umfasst, welche derart ausgebildet ist, ein optisches Radartreibersignal bereitzustellen und dieses in mindestens eine Glasfaser einzukoppeln, und wobei die Zentraleinheit ferner eine zentrale optische Empfangseinheit und eine Auswerteeinheit umfasst, wobei die Auswerteeinheit derart ausgebildet ist, ein von der zentralen optischen Empfangseinheit empfangenes aufmoduliertes Signal auszuwerten und eine hieraus abgeleitete Radarinformation auszugeben.

Daneben wird eine Radarsendeeinheit zur Verwendung in dem vorgenannten Radarsystem geschaffen, umfassend eine optische Empfangseinheit und einen Radarsender, wobei die optische Empfangseinheit derart ausgebildet ist, das optische Radartreibersignal über eine Glasfaser zu empfangen und in ein elektrisches Radartreibersignal umzuwandeln und dieses zum Antreiben des Radarsenders bereitzustellen.

Schlussendlich wird eine Radarempfangseinheit zur Verwendung in dem vorgenannten Radarsystem geschaffen, umfassend einen Radarempfänger, einen Mischer, und eine Modulationseinheit, wobei der Mischer derart ausgebildet ist, ein von dem Radarempfänger empfangenes Radarechosignal mit einem elektrischen Radartreibersignal zu mischen, und wobei die Modulationseinheit derart ausgebildet ist, das gemischte Signal auf ein empfangenes optisches Radartreibersignal aufzumodulieren und in eine Glasfaser einzukoppeln.

Die Grundidee der Erfindung ist, eine Signalübertragung zwischen einer Zentraleinheit und einer Radarsendeeinheit bzw. einer Radarempfangseinheit optisch zu realisieren. Hierzu wird ein Radartreibersignal in der Zentraleinheit optisch erzeugt und über mindestens eine Glasfaser an mindestens eine Radarempfangseinheit und/oder mindestens eine Radarsendeeinheit übertragen. In der Radarsendeeinheit wird das optische Radartreibersignal dann in ein elektrisches Radartreibersignal umgewandelt und zum Antreiben eines Radarsenders verwendet. Ein von einem Radarempfänger empfangenes Radarechosignal wird in einem Mischer der Radarempfangseinheit mit dem elektrischen Radartreibersignal gemischt. Das gemischte Signal wird anschließend mittels einer Modulationseinheit auf das optische Treibersignal aufmoduliert, in die Glasfaser eingekoppelt und an die Zentraleinheit zurück übermittelt. In der Zentraleinheit wird das aufmodulierte optische Signal empfangen und mittels einer Auswerteeinheit ausgewertet. Das Ergebnis wird anschließend als Radarinformation bereitgestellt.

Der Vorteil der Erfindung ist, dass eine Kointegration von optischen und elektrischen Bauteilen zur Erzeugung und zum Empfang eines Radarechosignals erfolgt. Die Erzeugung des Radartreibersignals erfolgt optisch und zentral in der Zentraleinheit, die Übertragung an eine Radarsendeeinheit bzw. an eine Radarempfangseinheit erfolgt ebenfalls optisch. Hierbei kann die um Größenordnungen geringere Dämpfung eines Signals bei der Übertragung über eine Glasfaser im Gegensatz zu einer elektrischen Übertragung genutzt werden. Die geringere Dämpfung ermöglicht es, eine große Anzahl von Radarsendeeinheiten und Radarempfangseinheiten gemeinsam mit einem Radartreibersignal zu versorgen. Darüber hinaus haben Glasfasern ein deutlich geringeres Gewicht als entsprechende elektrische Leitungen und sind weniger empfindlich gegenüber äußeren Störungen, wie beispielsweise elektromagnetischen Feldern.

Ein weiterer Vorteil der zentralen optischen Erzeugung des Radartreibersignals ist, dass die Radarsendeeinheiten und die Radarempfangseinheiten in kompakter Bauweise mit kleinen Abmessungen hergestellt und bereitgestellt werden können. Hierdurch werden Bauraum und Kosten eingespart.

Die Komplexität des Radarsystems liegt bei der erfindungsgemäßen Lösung in der Zentraleinheit und nicht mehr in der einzelnen Radarsendeeinheit bzw. der einzelnen Radarempfangseinheit. Die einzelnen Radarsendeeinheiten und Radarempfangseinheiten lassen sich hierdurch einfach und preiswert herstellen und im Falle eines Defektes einfach und schnell austauschen.

Dabei ist vorgesehen, dass das optische Radartreibersignal auf ein optisches Trägersignal mit einer Wellenlänge von vorzugsweise 1300 nm oder 1550 nm aufmoduliert ist. Dies hat den Vorteil, dass die Telekomwellenlängen einer Standardglasfaser genutzt werden können. Standardglasfasern weisen in diesen Wellenlängenbereichen eine besonders geringe Dispersion bzw. eine besonders geringe Dämpfung auf.

Weiter ist vorgesehen, dass die zentrale optische Sendeeinheit das optische Radartreibersignal mit einer Frequenz bereitstellt, welche einem Bruchteil einer zum Betrieb des Radarsenders notwendigen Trägerfrequenz entspricht, wobei die mindestens eine Radarsendeeinheit eine Vervielfachereinheit umfasst, welche derart ausgebildet ist, das optische Radartreibersignal von der Frequenz auf die notwendige Trägerfrequenz zu vervielfachen und bereitzustellen. Dies hat den Vorteil, dass das optische Radartreibersignal nicht mit der vollen notwendigen Trägerfrequenz bereitgestellt werden muss. Beispielsweise kann vorgesehen sein, dass ein Bruchteil von 1/8 gewählt wird. Bei einer notwendigen Trägerfrequenz von 77 GHz muss das optische Trägersignal dann nur eine Frequenz im Bereich von 19,25 GHz aufweisen. In der Radarsendeeinheit wird das optische Radarträgersignal dann elektrisch mittels einer Vervielfachereinheit vervielfacht und hierdurch auf die notwendige Trägerfrequenz gebracht. Ein weiterer Vorteil hierbei ist, dass durch die zentrale Bereitstellung des Radartreibersignals die einzelne Radarsendeeinheit bzw. die einzelne Radarempfangseinheit wesentlich weniger Energie benötigt, so dass hierdurch Probleme mit der Abführung von auftretender Abwärme vermindert werden können.

Dabei ist vorgesehen, dass das optische Radartreibersignal aus einem Radarträgersignal und einem Radarrampensignal besteht. Das Radarrampensignal führt dazu, dass die Frequenz des Radarträgersignals in einem bestimmten Frequenzbereich variiert wird (frequenzmoduliertes Radar, FMCW). Wird das optische Radartreibersignal nur mit einem Bruchteil der notwendigen Trägerfrequenz bereitgestellt, so werden das Radarträgersignal und das Radarrampensignal entsprechend auch nur mit einer diesem Bruchteil entsprechenden Frequenz bereitgestellt. Eine Vervielfachung erfolgt dann entsprechend in der Radarsendeeinheit bzw. der Radarempfangseinheit.

In einer weiterbildenden Ausführungsform ist vorgesehen, dass die optische Empfangseinheit der mindestens einen Radarsendeeinheit eine Photodiode umfasst, wobei die Vervielfachereinheit ferner derart ausgebildet ist, ein von der Photodiode bereitgestelltes elektrisches Signal in der Frequenz zu vervielfachen und hierdurch das elektrische Radartreibersignal mit der notwendigen Trägerfrequenz zu erzeugen und bereitzustellen.

In einer weiteren Ausführungsform ist vorgesehen, dass die zentrale optische Sendeeinheit zum Bereitstellen des optischen Radartreibersignals eine Laserdiode und einen Modulator umfasst.

Dies hat den Vorteil, dass die Laserdiode selber nicht moduliert werden muss, sondern das optische Trägersignal lediglich im CW-Betrieb bereitstellen muss. Der Modulator moduliert dann das bereitgestellte Trägersignal, um das optische Radartreibersignal bereitzustellen. Das Bereitstellen des optischen Radartreibersignals ist somit unabhängig von den dynamischen Eigenschaften der Laserdiode. Da die Laserdiode selber nicht moduliert werden muss, kann diese kostengünstig hergestellt werden.

In einer Ausführungsform ist vorgesehen, dass eine Vorspannung des Modulators derart gewählt ist, dass es zu einer Zwei-Seitenband-Modulation mit unterdrücktem optischen Trägersignal kommt. Dies hat den Vorteil, dass das bereitgestellte optische Radartreibersignal im Zusammenspiel mit einer Photodiode einer Radarsendeeinheit am anderen Ende der mindestens einen Glasfaser bereits zu einer Verdopplung des Signals genutzt werden kann. Da die Photodiode nur auf die Intensität der optischen Welle reagiert und gleichzeitig eine relativ geringe Bandbreite aufweist, ist ihr Ausgangsstrom proportional zu einer Differenzfrequenz der beiden auf sie eingestrahlten optischen Wellen in den beiden Seitenbändern. Die Photodiode stellt also bereits ein überlagertes elektrisches Signal mit verdoppelter Frequenz zur Verfügung. Im Anschluss muss dieses elektrische Signal dann entsprechend weniger oft vervielfacht werden.

In einer Ausführungsform ist vorgesehen, dass das Radarsystem mindestens eine weitere Radarsendeeinheit und/oder mindestens eine weitere Radarempfangseinheit umfasst, wobei die mindestens eine weitere Radarsendeeinheit und/oder die mindestens eine weitere Radarempfangseinheit zumindest abschnittsweise über dieselbe Glasfaser wie die mindestens eine Radarsendeeinheit und die mindestens eine Radarempfangseinheit mit der Zentraleinheit verbunden sind. Dies hat den Vorteil, dass eine Glasfaser für mehrere Radarsendeeinheiten und/oder mehrere Radarempfangseinheiten genutzt werden kann. Durch die gemeinsam genutzte Infrastruktur können Bauraum und Kosten eingespart werden. Hierdurch können auf einfache Weise auch große Arrays aus einzelnen Radarsendeeinheiten und Radarempfangseinheiten aufgebaut werden.

In einer weiteren Ausführungsform ist ferner vorgesehen, dass eine Bandbreite der Glasfaser durch ein Wavelength-Division-Multiplex-(WDM)-Verfahren und/oder ein Time-Domain-Multiplex-(TDM)-Verfahren aufgeteilt ist. Auf diese Weise kann die große Bandbreite der Glasfaser optimal genutzt werden. Hierzu werden insbesondere die von einzelnen Radarempfängern empfangenen und gemischten Radarechosignale in den Radarempfangseinheiten in entsprechend hierfür vorgesehene Frequenzkanäle, welche über die Bandbreite der Glasfaser verteilt sind, auf entsprechende Trägersignale aufmoduliert und in die Glasfaser eingekoppelt (WDM). Alternativ oder zusätzlich hierzu können die einzelnen empfangenen und gemischten Radarechosignale auf einzelne Zeitfenster verteilt und über die Glasfaser übertragen werden (TDM). Auf diese Weise können Hunderte von Radarsendeeinheiten und/oder Radarempfangseinheiten über eine gemeinsame Glasfaser betrieben werden. Dies ermöglicht eine schlanke und kostengünstige Infrastruktur.

In weiteren Ausführungsformen kann vorgesehen sein, dass die Zentraleinheit, die Radarsendeeinheit und/oder die Radarempfangseinheit auch weitere elektrische und/oder optischen Komponenten umfassen. So können beispielsweise Transimpedanzverstärker und andere Verstärkereinrichtungen zum Verstärken elektrischer Signale zum Einsatz kommen. Auch elektrische Modulatoren können bei der Signalverarbeitung eingesetzt werden.

Das Radarsystem und das Verfahren können insbesondere in einem Kraftfahrzeug bei der Umfelderfassung eingesetzt werden. Das Radarsystem, das Verfahren, die Zentraleinheit, die Radarsendeeinheit und die Radarempfangseinheit können aber prinzipiell auch auf sämtlichen Gebieten eingesetzt werden, auf denen Radarsysteme zum Einsatz kommen. Beispielhaft seien hier nur Flugzeugradarsysteme und Schiffsradarsysteme genannt.

Die beschriebenen Vorteile des Radarsystems sind zugleich auch die Vorteile des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Radarsystems;
- Fig. 2: eine schematische Darstellung einer Ausführungsform einer Radarsendeeinheit des Radarsystems;
- Fig. 3: eine schematische Darstellung einer Ausführungsform einer Radarempfangseinheit des Radarsystems;
- Fig. 4: eine schematische Darstellung einer Ausführungsform einer Zentraleinheit des Radarsystems.

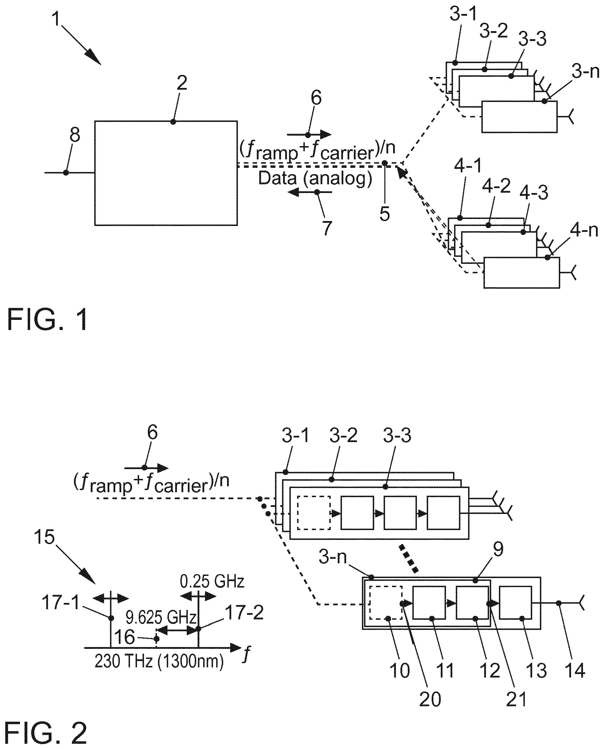

In Fig. 1 ist eine schematische Darstellung einer Ausführungsform des Radarsystems 1 gezeigt. Zur Verdeutlichung werden optische Verbindungen hierbei mittels gestrichelter Linien dargestellt. Das Radarsystem 1 umfasst eine Zentraleinheit 2, Radarsendeeinheiten 3-1, 3-2, 3-3,..., 3-n, Radarempfangseinheiten 4-1, 4-2, 4-3,..., 4-n und eine Glasfaser 5.

Die Zentraleinheit 2 ist über die Glasfaser 5 mit den Radarsendeeinheiten 3-1, 3-2, 3-3,..., 3-n, und den Radarempfangseinheiten 4-1, 4-2, 4-3,..., 4-n verbunden. Es sei hierbei angemerkt, dass je nach Ausgestaltung des Radarsystems 1 die Verbindung mittels der Glasfaser 5 zumindest abschnittsweise gemeinsam genutzt wird. Selbstverständlich können die einzelnen Radarsendeeinheiten 3-1, 3-2, 3-3,..., 3-n, und Radarempfangseinheiten 4-1, 4-2, 4-3,..., 4-n anschließend über nicht-gemeinsame einzelne Wellenleiter jeweils mit der Glasfaser 5 verbunden sein.

In der Zentraleinheit 2 wird ein optisches Radartreibersignal 6, bestehend aus einem Radarträgersignal mit der Frequenz *f_{carrier}* und einem Radarrampensignal mit der Frequenz *fᵣₐₘₚ*, erzeugt, indem diese auf ein optisches Trägersignal mit einer bestimmten Trägerfrequenz aufmoduliert werden. Hierbei wird jedoch lediglich eine Frequenz verwendet, welche einem Bruchteil *n* der zum Antreiben der einzelnen Radarsender notwendigen Trägerfrequenz entspricht. Das erzeugte optische Radartreibersignal 6 wird in die Glasfaser 5 eingekoppelt.

Das optische Radartreibersignal 6 wird an die einzelnen Radarsendeeinheiten 3-1, 3-2, 3-3,..., 3-n verteilt und von diesen jeweils in ein elektrisches Radartreibersignal umgewandelt. Dieses dient dann zum Antreiben der jeweiligen Radarsender in den Radarsendeeinheiten 3-1, 3-2, 3-3,..., 3-n. Zusätzlich wird das optische Radartreibersignal 6 auch an die einzelnen Radarempfangseinheiten 4-1, 4-2, 4-3,..., 4-n verteilt.

Die von den einzelnen Radarempfangseinheiten 4-1, 4-2, 4-3,..., 4-n empfangenen Radarechosignale werden als analoge Rohdaten auf das optische Radartreibersignal 6 aufmoduliert und als aufmoduliertes Signal 7 an die Zentraleinheit 2 übermittelt, indem das aufmodulierte Signal 7 in die Glasfaser 5 eingekoppelt wird.

Die Zentraleinheit 2 empfängt dann jeweils das aufmodulierte Signal 7 jeder Radarempfangseinheit 4-1, 4-2, 4-3,..., 4-n, wertet dieses aus und stellt eine hieraus abgeleitete Radarinformation 8 zur Verfügung.

In Fig.2 ist eine schematische Darstellung einer Ausführungsform der Radarsendeeinheiten 3-1, 3-2, 3-3,..., 3-n des Radarsystems 1 gezeigt. Zur Verdeutlichung werden optische Verbindungen und Einheiten mittels gestrichelter Linien, elektrische mittels durchgezogener Linien dargestellt. Der Aufbau der Radarsendeeinheiten 3-1, 3-2, 3-3,..., 3-n ist beispielhaft an der Radarsendeeinheit 3-n gezeigt, die anderen Radarsendeeinheiten 3-1, 3-2, 3-3,... sind aber gleich aufgebaut. Die Radarsendeeinheit 3-n umfasst eine optische Empfangseinheit 9, die eine Photodiode 10, einen Transimpedanzverstärker 11 und eine Vervielfachereinheit 12 umfasst, sowie einen Verstärker 13 und einen Radarsender 14.

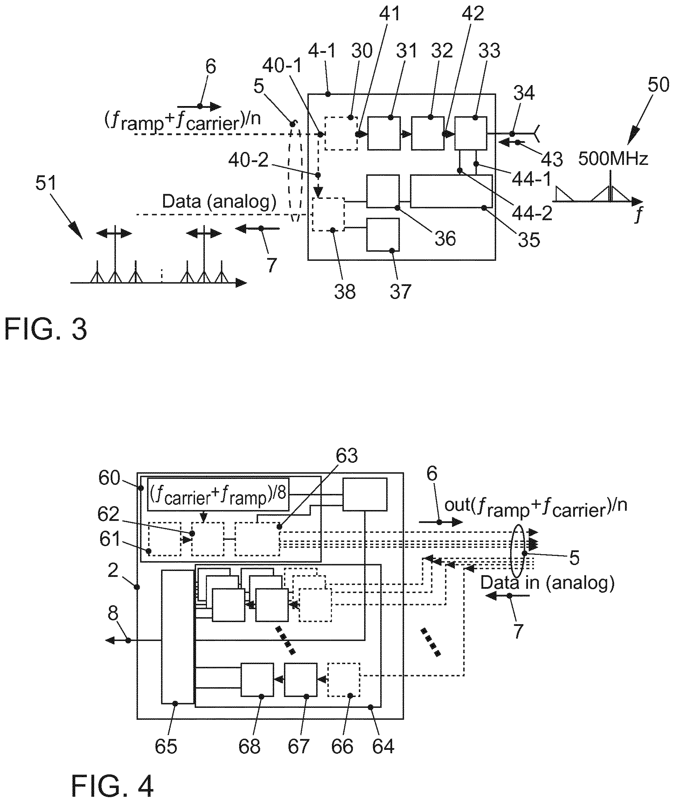

In der gezeigten Ausführungsform wurde das optische Radartreibersignal 6 im Wege der Zwei-Seitenband-Modulation mit unterdrücktem optischen Träger von der Zentraleinheit 2 (Fig. 1 und Fig. 4) bereitgestellt. Das Frequenzspektrum 15 dieses bereitgestellten optischen Radartreibersignals 6 ist als Inset ebenfalls in der Fig. 2 dargestellt. Beispielhaft wurde bei der Erzeugung des optischen Radartreibersignals 6 ein optischer Träger von 1300 nm bzw. 230 THz verwendet. Dieser ist in der gezeigten Ausführungsform unterdrückt. Lediglich die zwei Seitenbänder 17-1, 17-2 sind zu sehen. In dem Beispiel liegt die notwendige Trägerfrequenz *f_{carrier}* des Radarträgersignals des Radarsenders 14 bei 77 GHz und der gewählte Bruchteil bei 1/n = 1/8, so dass sich eine Frequenz von 9,625 GHz ergibt, welche auf das optische Trägersignal 16 bei 1300 nm aufmoduliert wurde. Dementsprechend liegen die beiden Seitenbänder 17-1, 17-2 in einem Abstand von 9,625 GHz um die optische Trägersignal 16 herum. Wählt man für ein Radarrampensignal eine Frequenz *fᵣₐₘₚ* von 2 GHz, so variiert die resultierende Gesamtfrequenz in jedem der Seitenbänder 17-1, 17-2 um jeweils 2 GHz / 8 = 0,25 GHz.

Das optische Radartreibersignal 6 wird auf die Photodiode 10 geleitet. Da die Photodiode nur auf die Intensität der optischen Welle reagiert und gleichzeitig eine im Vergleich zur Frequenz des optischen Trägers geringe Bandbreite aufweist, ist der Ausgangsstrom 20 der Photodiode 10 proportional zu einer Differenzfrequenz der beiden auf diese eingestrahlten optischen Wellen in dem jeweiligen Seitenband 17-1, 17-2. Das von der Photodiode als Ausgangsstrom 20 bereitgestellte elektrische Signal wird deshalb in Bezug auf seine Frequenz im Vergleich zu der in dem optischen Radartreibersignal 6 jeweils in den Seitenbändern 17-1, 17-2 bereitgestellten Frequenz von jeweils 9,625 GHz auf eine Frequenz von 19,25 GHz verdoppelt. Dieser Ausgangsstrom 20 wird anschließend von dem Transimpedanzverstärker 11 in ein proportionales Spannungssignal umgewandelt, das von der Vervielfachereinheit 12, welche in der gezeigten Ausführungsform ein elektrischer Vervierfacher ist, in seiner Frequenz vervierfacht, so dass auf diese Weise ein elektrisches Radartreibersignal 21 mit der notwendigen Trägerfrequenz von 77 GHz erzeugt wird. Dieses elektrische Radartreibersignal 21 wird dann in dem Verstärker 13 verstärkt und dann dem Radarsender 14 zugeführt.

In Fig. 3 ist eine schematische Darstellung einer Ausführungsform einer Radarempfangseinheit 4-1 des Radarsystems 1 (Fig. 1) dargestellt. Zur Verdeutlichung werden optische Verbindungen und Einheiten mittels gestrichelter Linien, elektrische mittels durchgezogener Linien dargestellt. Die Radarempfangseinheit 4-1 umfasst eine Photodiode 30, einen Transimpedanzverstärker 31, eine elektrischen Vervielfachereinheit 32, einen IQ-Mischer 33, einen Radarempfänger 34, eine Bearbeitungseinheit 35, eine Modulationseinheit 38, die von einer Treibereinheit 36 gesteuert und von einer Versorgungseinheit 37 mit einer Vorspannung versorgt wird.

Das von der Zentraleinheit 2 (Fig. 1) bereitgestellte optische Treibersignal 6 wird am Eingang der Radarempfangseinheit 4-1 in zwei Zweige 40-1, 40-2 aufgespalten. Im oberen Zweig 40-1 wird das optische Trägersignal 6 wie bei den Radarsendeeinheiten 3-1, 3-2, 3-3,..., 3-n (Fig. 2) auf die Photodiode 30 eingestrahlt. Der von der Photodiode 30 gelieferte Ausgangsstrom 41 weist auch hier eine verdoppelte Frequenz auf (vgl. Beschreibung zu Fig. 2). Der Ausgangstrom 41 wird im Transimpedanzverstärker 31 in ein proportionales Spannungssignal gewandelt und in der Vervielfachereinheit 32 vervierfacht und als elektrisches Radartreibersignal 42 bereitgestellt. Im IQ-Mischer 33 wird das von dem Radarempfänger 34 empfangene und bereitgestellte Radarechosignal 43 mit dem elektrischen Radartreibersignal 42 gemischt. Das gemischte Signal wird anschließend in Form von I- und Q-Daten 44-1, 44-2 in der Bearbeitungseinheit 35 verarbeitet. Die Bearbeitungseinheit 35 moduliert die I- und Q-Daten 44-1, 44-2 beispielsweise auf eine elektrische Trägerfrequenz auf. Im vorliegenden Beispiel wurde für eine der beiden Daten beispielsweise eine Trägerfrequenz von 500 MHz gewählt (siehe Frequenzspektrum 50 im rechten Inset von Fig. 3). Das gemischte und bearbeitete Signal wird anschließend mittels der Treibereinheit 36 durch die Modulationseinheit 38, die beispielsweise als Mach-Zehnder-Modulator ausgebildet sein kann, auf das optische Radartreibersignal 6, welches der Modulationseinheit 38 über den zweiten Zweig 40-2 zugeführt wird, aufmoduliert. Das aufmodulierte Signal 7 wird anschließend in die Glasfaser 5 eingekoppelt und an die Zentraleinheit 2 (Fig.1) übermittelt. Das Inset auf der linken Seite von Fig. 3 zeigt beispielhaft ein Frequenzspektrum 51, in dem das auf das optische Radartreibersignal 6 aufmodulierte Signal 7 zu sehen ist.

In Fig. 4 ist eine schematische Darstellung einer Ausführungsform einer Zentraleinheit 2 des Radarsystems 1 (Fig. 1) gezeigt. Zum Bereitstellen des optischen Radartreibersignals 6 umfasst die Zentraleinheit 2 eine zentrale optische Sendeeinheit 60. Die zentrale optische Sendeeinheit 60 umfasst eine Laserdiode 61, einen Modulator 62 und optional einen 1:N-Schalter 63. Die Laserdiode 61 stellt ein CW-Signal mit einer vorgegebenen optischen Trägerfrequenz bereit. Diese Trägerfrequenz orientiert sich vorzugsweise an den Telekommunikationsfenstern der Glasfaser 5, welche bei 1300 nm und 1550 nm liegen. Der Modulator 62, beispielsweise ein Mach-Zehnder-Modulator, moduliert auf das CW-Signal der Laserdiode 61 das Radartreibersignal, bestehend aus einem Radarträgersignal und einem Radarrampensignal, wobei dieses lediglich mit einem Bruchteil 1/n der notwendigen Trägerfrequenz aufmoduliert wird. In der gezeigten Ausführungsform beträgt der Bruchteil 1/8, so dass bei einer notwendigen Trägerfrequenz von 77 GHz eine Frequenz von 9,625 GHz aufmoduliert wird. In der gezeigten Ausführungsform wurde eine Vorspannung des Modulators 62 derart gewählt, dass es zu einer Zwei-Seitenband-Modulation mit unterdrücktem optischen Träger kommt. Der optionale 1:N-Schalter 63 sorgt dafür, dass das optische Radartreibersignal 6 auf mehreren Kanälen für die einzelnen Radarsendeeinheiten und Radarempfangseinheiten bereitgestellt werden kann.

Zum Empfangen und Auswerten des aufmodulierten Signals 7 bzw. der aufmodulierten Signale 7 der einzelnen Radarempfangseinheiten umfasst die Zentraleinheit 2 eine zentrale optische Empfangseinheit 64 und eine Auswerteeinheit 65. Die zentrale optische Empfangseinheit 64 umfasst für jedes auszuwertende aufmodulierte Signal 7 einer zugehörigen Radarempfangseinheit jeweils eine Photodiode 66, einen Transimpedanzverstärker 67 und einen IQ-Mischer 68. Zusätzlich kann die zentrale optische Empfangseinheit 64 noch Filtereinheiten zum Auswählen einzelner Wellenlängenbereiche etc. aufweisen. Jedes der aufmodulierten Signale 7 wird jeweils von der Photodiode 66 in einen Ausgangsstrom umgewandelt, der Ausgangsstrom wird im Transimpedanzverstärker 67 in ein proportionales Spannungssignal umgewandelt und anschließend im IQ-Mischer demoduliert. Das demodulierte Signal wird der Auswerteeinheit 65 zugeführt, welche dieses digitalisiert, auswertet und hieraus eine Radarinformation 8 ableitet und ausgibt. Die Radarinformation 8 kann anschließend weiterverarbeitet werden, so dass eine Umfelderfassung realisiert werden kann.

### Bezugszeichenliste

- 1: Radarsystem
- 2: Zentraleinheit
- 3-1: Radarsendeeinheit
- 3-2: Radarsendeeinheit
- 3-3: Radarsendeeinheit
- 3-n: Radarsendeeinheit
- 4-1: Radarempfangseinheit
- 4-2: Radarempfangseinheit
- 4-3: Radarempfangseinheit
- 4-n: Radarempfangseinheit
- 5: Glasfaser
- 6: optisches Radartreibersignal
- 7: aufmoduliertes Signal
- 8: Radarinformation
- 9: optische Empfangseinheit
- 10: Photodiode
- 11: Transimpedanzverstärker
- 12: Vervielfachereinheit
- 13: Verstärker
- 14: Radarsender
- 15: Frequenzspektrum
- 16: optisches Trägersignal
- 17-1: Seitenband
- 17-2: Seitenband
- 20: Ausgangsstrom
- 21: elektrisches Radartreibersignal
- 30: Photodiode
- 31: Transimpedanzverstärker
- 32: Vervielfachereinheit
- 33: IQ-Mischer
- 34: Radarempfänger
- 35: Bearbeitungseinheit
- 36: Treibereinheit
- 37: Versorgungseinheit
- 38: Modulationseinheit
- 40-1: Zweig
- 40-2: Zweig
- 41: Ausgangsstrom
- 42: elektrisches Radartreibersignal
- 43: Radarechosignal
- 44-1: I-Daten
- 44-2: Q-Daten
- 50: Frequenzspektrum
- 51: Frequenzspektrum
- 60: zentrale optische Sendeeinheit
- 61: Laserdiode
- 62: Modulator
- 63: 1:N-Schalter
- 64: zentrale optische Empfangseinheit
- 65: Auswerteeinheit
- 66: Photodiode
- 67: Transimpedanzverstärker
- 68: IQ-Mischer

## Patentansprüche

1. Radarsystem (1), umfassend
mindestens eine Radarsendeeinheit (3-1, 3-2, 3-3, 3-n),
mindestens eine Radarempfangseinheit (4-1, 4-2, 4-3, 4-n),
eine Zentraleinheit (2), und
mindestens eine Glasfaser (5), wobei die mindestens eine Radarsendeeinheit (3-1, 3-2, 3-3, 3-n) und die mindestens eine Radarempfangseinheit (4-1, 4-2, 4-3, 4-n) zumindest abschnittsweise über die mindestens eine Glasfaser (5) mit der Zentraleinheit (2) verbunden sind,
wobei die Zentraleinheit (2) eine zentrale optische Sendeeinheit (60) umfasst, welche derart ausgebildet ist, ein optisches Radartreibersignal (6) bereitzustellen und dieses in die mindestens eine Glasfaser (5) einzukoppeln, und
wobei die mindestens eine Radarsendeeinheit (3-1, 3-2, 3-3, 3-n) eine optische Empfangseinheit (9) und einen Radarsender (14) umfasst, wobei die optische Empfangseinheit (9) derart ausgebildet ist, das optische Radartreibersignal (6) über die mindestens eine Glasfaser (5) zu empfangen und in ein elektrisches Radartreibersignal (21) umzuwandeln und dieses zum Antreiben des Radarsenders (14) bereitzustellen,
wobei die mindestens eine Radarempfangseinheit (4-1, 4-2, 4-3, 4-n) einen Radarempfänger (34), einen Mischer (33) und eine optische Modulationseinheit (38) umfasst, wobei der Mischer (33) derart ausgebildet ist, ein von dem Radarempfänger (34) empfangenes Radarechosignal (43) mit dem elektrischen Radartreibersignal (42) zu mischen, und wobei die Modulationseinheit (38) derart ausgebildet ist, das gemischte Signal auf das optische Radartreibersignal (6) aufzumodulieren und in die mindestens eine Glasfaser (5) einzukoppeln, und
wobei die Zentraleinheit (2) ferner eine zentrale optische Empfangseinheit (64) und eine Auswerteeinheit (65) umfasst, wobei die Auswerteeinheit (65) derart ausgebildet ist, das von der zentralen optischen Empfangseinheit (64) empfangene aufmodulierte Signal (7) auszuwerten und eine hieraus abgeleitete Radarinformation (8) auszugeben,
**dadurch gekennzeichnet, dass**
in der zentralen optischen Sendeeinheit (60) das optische Radartreibersignal (6) bestehend aus einem Radarträgersignal mit einer Frequenz f_{carrier} und einem Radarrampensignal mit der Frequenz fᵣₐₘₚ erzeugt wird, indem diese auf ein optisches Trägersignal mit einer bestimmten Trägerfrequenz aufmoduliert werden, wobei das optische Radarträgersignal und das Radarrampensignal eine Frequenz aufweisen, die nur einem Bruchteil einer zum Betrieb des Radarsenders (14) notwendigen elektrischen Trägerfrequenz entspricht,
wobei die mindestens eine Radarsendeeinheit (3-1, 3-2, 3-3, 3-n) eine Vervielfachereinheit (12) umfasst, wobei in der Radarsendeeinheit (3-1, 3-2, 3-3, 3-4) das optische Radartreibersignal (6) mittels der optischen Empfangseinheit (9) in ein elektrisches Signal gewandelt wird und mittels der Vervielfachereinheit (12) das elektrische Signal in ein elektrisches Radartreibersignal (21) mit der notwendigen elektrischen Trägerfrequenz für den Radarsender (14) vervielfacht und bereitgestellt wird.

2. Radarsystem (1) nach Anspruch 1, **dadurch gekennzeichnet, dass** das optische Trägersignal eine Wellenlänge von 1300 nm oder 1550 nm aufweist.

3. Radarsystem (1) nach Anspruch 1 oder 2, **dadurch gekennzeichnet, dass** die optische Empfangseinheit (9) der mindestens einen Radarsendeeinheit (3-1, 3-2, 3-3, 3-n), eine Photodiode (10) umfasst.

4. Radarsystem (1) nach einem der vorangegangen Ansprüche, **dadurch gekennzeichnet, dass** die zentrale optische Sendeeinheit (60) zum Bereitstellen des optischen Radartreibersignals (6) eine Laserdiode (61) und einen Modulator (62) umfasst.

5. Radarsystem (1) nach Anspruch 4, **dadurch gekennzeichnet, dass** eine Vorspannung des Modulators (62) derart gewählt ist, dass es zu einer Zwei-Seitenband-Modulation mit unterdrücktem optischen Trägersignal kommt.

6. Radarsystem (1) nach einem der vorangegangenen Ansprüche, **dadurch gekennzeichnet, dass** das Radarsystem (1) mindestens eine weitere Radarsendeeinheit (3-1, 3-2, 3-3, 3-n) und/oder mindestens eine weitere Radarempfangseinheit (4-1, 4-2, 4-3, 4-n) umfasst, wobei die mindestens eine weitere Radarsendeeinheit (3-1, 3-2, 3-3, 3-n) und/oder die mindestens eine weitere Radarempfangseinheit (4-1, 4-2, 4-3, 4-n) zumindest abschnittsweise über dieselbe Glasfaser (5) wie die mindestens eine Radarsendeeinheit (3-1, 3-2, 3-3, 3-n) und die mindestens eine Radarempfangseinheit (4-1, 4-2, 4-3, 4-n) mit der Zentraleinheit (2) verbunden sind.

7. Radarsystem (1) nach Anspruch 6, **dadurch gekennzeichnet, dass** eine Bandbreite der Glasfaser (5) durch ein Wavelength-Division-Multiplex-Verfahren und/oder ein Time-Domain-Multiplex-Verfahren aufgeteilt ist.

8. Verfahren zum Betreiben eines Radarsystems (1), umfassend die folgenden Schritte:
Erzeugen und Bereitstellen eines optischen Radartreibersignals (6) mittels einer zentralen optischen Sendeeinheit (60) einer Zentraleinheit,
Übermitteln des optischen Radartreibersignals (6) mittels mindestens einer Glasfaser (5) an mindestens eine Radarsendeeinheit (3-1, 3-2, 3-3, 3-n),
Empfangen des optischen Radartreibersignals (6) und Umwandeln des optischen Radartreibersignals (6) in ein elektrisches Radartreibersignal (21) mittels einer optischen Empfangseinheit (9) der mindestens einen Radarsendeeinheit (3-1, 3-2, 3-3, 3-n),
Antreiben des Radarsenders (14) der Radarsendeeinheit (3-1, 3-2, 3-3, 3-n) mit dem elektrischen Radartreibersignal (21),
Empfangen eines Radarechosignals (43) mittels eines Radarempfängers (34) einer Radarempfangseinheit (4-1, 4-2, 4-3, 4-n),
Mischen des empfangenen Radarechosignals (43) mit dem elektrischen Radartreibersignal (42) in einem Mischer (33) der Radarempfangseinheit (4-1, 4-2, 4-3, 4-n),
Aufmodulieren des gemischten Signals auf das optische Radartreibersignal (6) mittels einer Modulationseinheit (38) der Radarempfangseinheit (4-1, 4-2, 4-3, 4-n),
Übermitteln des aufmodulierten Signals (7) über die mindestens eine Glasfaser (5) an die Zentraleinheit (2),
Empfangen des aufmodulierten Signals (7) mittels einer zentralen optischen Empfangseinheit (64) der Zentraleinheit (2),
Auswerten des empfangenen aufmodulierten Signals (7) mittels einer Auswerteeinheit (65) der Zentraleinheit (2),
Ausgeben einer hieraus abgeleiteten Radarinformation (8),
**dadurch gekennzeichnet, dass**
in der zentralen optischen Sendeeinheit (60) das optische Radartreibersignal (6) bestehend aus einem Radarträgersignal mit einer Frequenz f_{carrier} und einem Radarrampensignal mit der Frequenz fᵣₐₘₚ erzeugt wird, indem diese auf ein optisches Trägersignal mit einer bestimmten Trägerfrequenz aufmoduliert werden, wobei das optische Radarträgersignal und das Radarrampensignal eine Frequenz aufweisen, die nur einem Bruchteil einer zum Betrieb des Radarsenders (14) notwendigen elektrischen Trägerfrequenz entspricht,
wobei die mindestens eine Radarsendeeinheit (3-1, 3-2, 3-3, 3-n) eine Vervielfachereinheit (12) umfasst, wobei in der Radarsendeeinheit (3-1, 3-2, 3-3, 3-4) das optische Radartreibersignal (6) mittels der optischen Empfangseinheit (9) in ein elektrisches Signal gewandelt wird und mittels der Vervielfachereinheit (12) das elektrische Signal in ein elektrisches Radartreibersignal (21) mit der notwendigen elektrischen Trägerfrequenz für den Radarsender (14) vervielfacht und bereitgestellt wird.

9. Zentraleinheit (2) zur Verwendung in einem Radarsystem (1) gemäß einem der Ansprüche 1 bis 7,
wobei die Zentraleinheit (2) eine zentrale optische Sendeeinheit (60) umfasst, welche derart ausgebildet ist, ein optisches Radartreibersignal (6) bereitzustellen und dieses in mindestens eine Glasfaser (5) einzukoppeln, und
wobei die Zentraleinheit (2) ferner eine zentrale optische Empfangseinheit (64) und eine Auswerteeinheit (65) umfasst, wobei die Auswerteeinheit (65) derart ausgebildet ist, ein von der zentralen optischen Empfangseinheit (64) empfangenes aufmoduliertes Signal (7) auszuwerten und eine hieraus abgeleitete Radarinformation (8) auszugeben,
**dadurch gekennzeichnet, dass**
in der zentralen optischen Sendeeinheit (60) das optische Radartreibersignal (6) bestehend aus einem Radarträgersignal mit einer Frequenz f_{carrier} und einem Radarrampensignal mit der Frequenz fᵣₐₘₚ erzeugt wird, indem diese auf ein optisches Trägersignal mit einer bestimmten Trägerfrequenz aufmoduliert werden, wobei das optische Radarträgersignal und das Radarrampensignal eine Frequenz aufweisen, die nur einem Bruchteil einer zum Betrieb des Radarsenders (14) notwendigen elektrischen Trägerfrequenz entspricht:

10. Radarsendeeinheit (3-1, 3-2, 3-3, 3-n) zur Verwendung in einem Radarsystem (1) gemäß einem der Ansprüche 1 bis 7, umfassend:
eine optische Empfangseinheit (9) und
einen Radarsender (14),
wobei die optische Empfangseinheit (9) derart ausgebildet ist, das optische Radartreibersignal (6) mit einer Frequenz über eine Glasfaser (5) zu empfangen und in ein elektrisches Radartreibersignal (21) umzuwandeln und dieses zum Antreiben des Radarsenders (14) bereitzustellen,
wobei die mindestens eine Radarsendeeinheit (3-1, 3-2, 3-3, 3-n) eine Vervielfachereinheit (12) umfasst, wobei in der Radarsendeeinheit (3-1, 3-2, 3-3, 3-4) das optische Radartreibersignal (6) mittels der optischen Empfangseinheit (9) in ein elektrisches Signal gewandelt wird und mittels der Vervielfachereinheit (12) das elektrische Signal in ein elektrisches Radartreibersignal (21) mit der notwendigen elektrischen Trägerfrequenz für den Radarsender (14) vervielfacht und bereitgestellt wird.

11. Radarempfangseinheit (4-1, 4-2, 4-3, 4-n) zur Verwendung in einem Radarsystem (1) gemäß einem der Ansprüche 1 bis 7, umfassend:
einen Radarempfänger (34),
einen Mischer (33), und
eine Modulationseinheit (38),
wobei der Mischer (33) derart ausgebildet ist, ein von dem Radarempfänger (34) empfangenes Radarechosignal (43) mit einem elektrischen Radartreibersignal (42) zu mischen, und wobei die Modulationseinheit (38) derart ausgebildet ist, das gemischte Signal auf ein empfangenes optisches Radartreibersignal (6) aufzumodulieren und in eine Glasfaser (5) einzukoppeln.

## Claims

1. Radar system (1) comprising:
at least one radar transmission unit (3-1, 3-2, 3-3, 3-n),
at least one radar reception unit (4-1, 4-2, 4-3, 4-n),
a central unit (2), and
at least one glass fiber (5), the at least one radar transmission unit (3-1, 3-2, 3-3, 3-n) and the at least one radar reception unit (4-1, 4-2, 4-3, 4-n) being connected to the central unit (2) at least in portions via the at least one glass fiber (5),
the central unit (2) comprising a central optical transmission unit (60) which is designed to provide an optical radar driver signal (6) and to couple this signal into the at least one glass fiber (5), and
the at least one radar transmission unit (3-1, 3-2, 3-3, 3-n) comprising an optical reception unit (9) and a radar transmitter (14), the optical reception unit (9) being designed to receive the optical radar driver signal (6) via the at least one glass fiber (5) and convert this signal into an electrical radar driver signal (21) and provide this signal to drive the radar transmitter (14),
the at least one radar reception unit (4-1, 4-2, 4-3, 4-n) comprising a radar receiver (34), a mixer (33), and an optical modulation unit (38), the mixer (33) being designed to mix a radar echo signal (43) received by the radar receiver (34) with the electrical radar driver signal (42), and the modulation unit (38) being designed to modulate the mixed signal onto the optical radar driver signal (6) and couple it into the at least one glass fiber (5), and
the central unit (2) further comprising a central optical reception unit (64) and an evaluation unit (65), the evaluation unit (65) being designed to evaluate the modulated signal (7) received by the central optical reception unit (64) and to output radar information (8) derived therefrom,
**characterized in that**
the optical radar driver signal (6) consisting of a radar carrier signal having a frequency f_{carrier} and a radar ramp signal having the frequency fᵣₐₘₚ is generated in the central optical transmission unit (60) by modulating these onto an optical carrier signal having a particular carrier frequency, the optical radar carrier signal and the radar ramp signal having a frequency corresponding to only a fraction of an electrical carrier frequency necessary for operating the radar transmitter (14),
the at least one radar transmission unit (3-1, 3-2, 3-3, 3-n) comprising a multiplier unit (12), the optical radar driver signal (6) being converted into an electrical signal by means of the optical reception unit (9) in the radar transmission unit (3-1, 3-2, 3-3, 3-4), and the electrical signal being multiplied and provided into an electrical radar driver signal (21) having the necessary electrical carrier frequency for the radar transmitter (14) by means of the multiplier unit (12).

2. Radar system (1) according to claim 1, **characterized in that** the optical carrier signal has a wavelength of 1300 nm or 1550 nm.

3. Radar system (1) according to either claim 1 or claim 2,
**characterized in that** the optical reception unit (9) of the at least one radar transmission unit (3-1, 3-2, 3-3, 3-n) comprises a photodiode (10).

4. Radar system (1) according to any of the preceding claims, **characterized in that** the central optical transmission unit (60) for providing the optical radar driver signal (6) comprises a laser diode (61) and a modulator (62).

5. Radar system (1) according to claim 4, **characterized in that** a bias voltage of the modulator (62) is selected such that a two-sideband modulation having a suppressed optical carrier signal occurs.

6. Radar system (1) according to any of the preceding claims,
**characterized in that** the radar system (1) comprises at least one further radar transmission unit (3-1, 3-2, 3-3, 3-n) and/or at least one further radar reception unit (4-1, 4-2, 4-3, 4-n), the at least one further radar transmission unit (3-1, 3-2, 3-3, 3-n) and/or the at least one further radar reception unit (4-1, 4-2, 4-3, 4-n) being connected to the central unit (2) at least in portions via the same glass fiber (5) as the at least one radar transmission unit (3-1, 3-2, 3-3, 3-n) and the at least one radar reception unit (4-1, 4-2, 4-3, 4-n).

7. Radar system (1) according to claim 6, **characterized in that** a bandwidth of the glass fiber (5) is divided by a Wavelength Division Multiplex method and/or a Time Domain Multiplex method.

8. Method for operating a radar system (1), comprising the following steps:
generating and providing an optical radar driver signal (6) by means of a central optical transmission unit (60) of a central unit,
transmitting the optical radar driver signal (6) by means of at least one glass fiber (5) to at least one radar transmission unit (3-1, 3-2, 3-3, 3-n),
receiving the radar driver signal (6) and converting the radar driver signal (6) into an electrical radar driver signal (21) by means of an optical reception unit (9) of the at least one radar transmission unit (3-1, 3-2, 3-3, 3-n), driving the radar transmitter (14) of the radar transmission unit (3-1, 3-2, 3-3, 3-n) with the electrical radar driver signal (21),
receiving a radar echo signal (43) by means of a radar receiver (34) of a radar reception unit (4-1, 4-2, 4-3, 4-n),
mixing the received radar echo signal (43) with the electrical radar driver signal (42) in a mixer (33) of the radar reception unit (4-1, 4-2, 4-3, 4-n),
modulating the mixed signal onto the optical radar driver signal (6) by means of a modulation unit (38) of the radar reception unit (4-1, 4-2, 4-3, 4-n),
transmitting the modulated signal (7) via the at least one glass fiber (5) to the central unit (2),
receiving the modulated signal (7) by means of a central optical reception unit (64) of the central unit (2),
evaluating the received modulated signal (7) by means of an evaluation unit (65) of the central unit (2),
outputting radar information (8) derived therefrom,
**characterized in that**
the optical radar driver signal (6) consisting of a radar carrier signal having a frequency f_{carrier} and a radar ramp signal having the frequency fᵣₐₘₚ is generated in the central optical transmission unit (60) by modulating these onto an optical carrier signal having a particular carrier frequency, the optical radar carrier signal and the radar ramp signal having a frequency corresponding to only a fraction of an electrical carrier frequency necessary for operating the radar transmitter (14),
the at least one radar transmission unit (3-1, 3-2, 3-3, 3-n) comprising a multiplier unit (12), the optical radar driver signal (6) being converted into an electrical signal by means of the optical reception unit (9) in the radar transmission unit (3-1, 3-2, 3-3, 3-4), and the electrical signal being multiplied and provided into an electrical radar driver signal (21) having the necessary electrical carrier frequency for the radar transmitter (14) by means of the multiplier unit (12).

9. Central unit (2) for use in a radar system (1) according to any of claims 1 to 7,
the central unit (2) comprising a central optical transmission unit (60) which is designed to provide an optical radar driver signal (6) and to couple this signal into at least one glass fiber (5), and
the central unit (2) further comprising a central optical reception unit (64) and an evaluation unit (65), the evaluation unit (65) being designed to evaluate a modulated signal (7) received by the central optical reception unit (64) and to output radar information (8) derived therefrom,
**characterized in that**
the optical radar driver signal (6) consisting of a radar carrier signal having a frequency f_{carrier} and a radar ramp signal having the frequency fᵣₐₘₚ is generated in the central optical transmission unit (60) by modulating these onto an optical carrier signal having a particular carrier frequency, the optical radar carrier signal and the radar ramp signal having a frequency corresponding to only a fraction of an electrical carrier frequency necessary for operating the radar transmitter (14).

10. Radar transmission unit (3-1, 3-2, 3-3, 3-n) for use in a radar system (1) according to any of claims 1 to 7, comprising:
an optical reception unit (9), and
a radar transmitter (14),
wherein the optical reception unit (9) is designed to receive the optical radar driver signal (6) at a frequency via a glass fiber (5) and to convert this signal into an electrical radar driver signal (21) and to provide this signal to drive the radar transmitter (14),
the at least one radar transmission unit (3-1, 3-2, 3-3, 3-n) comprising a multiplier unit (12), the optical radar driver signal (6) being converted into an electrical signal by means of the optical reception unit (9) in the radar transmission unit (3-1, 3-2, 3-3, 3-4), and the electrical signal being multiplied and provided into an electrical radar driver signal (21) having the necessary electrical carrier frequency for the radar transmitter (14) by means of the multiplier unit (12).

11. Radar reception unit (4-1, 4-2, 4-3, 4-n) for use in a radar system (1) according to any of claims 1 to 7, comprising:
a radar receiver (34),
a mixer (33), and
a modulation unit (38),
wherein the mixer (33) is designed to mix a radar echo signal (43) received by the radar receiver (34) with an electrical radar driver signal (42), and wherein the modulation unit (38) is designed to modulate the mixed signal onto a received optical radar driver signal (6) and couple it into a glass fiber (5).

## Revendications

1. Système radar (1), comprenant
au moins une unité de transmission radar (3-1, 3-2, 3-3, 3-n),
au moins une unité de réception radar (4-1, 4-2, 4-3, 4-n),
une unité centrale (2), et
au moins une fibre optique (5), dans lequel l'au moins une unité de transmission radar (3-1, 3-2, 3-3, 3-n) et l'au moins une unité de réception radar (4-1, 4-2, 4-3, 4-n) sont connectées au moins dans certaines sections à l'unité centrale (2) par l'intermédiaire de l'au moins une fibre optique (5),
dans lequel l'unité centrale (2) comprend une unité de transmission optique centrale (60) qui est configurée pour fournir un signal d'attaque radar optique (6) et pour le coupler dans l'au moins une fibre optique (5), et
dans lequel l'au moins une unité de transmission radar (3-1, 3-2, 3-3, 3-n) comprend une unité de réception optique (9) et un transmetteur radar (14), dans lequel l'unité de réception optique (9) est configurée pour recevoir le signal d'attaque radar optique (6) par l'intermédiaire de l'au moins une fibre optique (5) et pour le convertir en un signal d'attaque radar électrique (21) et pour le fournir pour l'entraînement du transmetteur radar (14),
dans lequel l'au moins une unité de réception radar (4-1, 4-2, 4-3, 4-n) comprend un récepteur radar (34), un mélangeur (33) et une unité de modulation (38) optique, dans lequel le mélangeur (33) est configuré pour mélanger un signal d'écho radar (43) reçu par le récepteur radar (34) avec le signal d'attaque radar électrique (42), et dans lequel l'unité de modulation (38) est configurée pour moduler le signal mélangé sur le signal d'attaque radar optique (6) et pour le coupler dans l'au moins une fibre optique (5), et
dans lequel l'unité centrale (2) comprend en outre une unité de réception optique centrale (64) et une unité d'évaluation (65), dans lequel l'unité d'évaluation (65) est configurée pour évaluer le signal modulé (7) reçu par l'unité de réception optique centrale (64) et pour émettre en sortie des informations radar (8) dérivées de celui-ci,
**caractérisé en ce que**
dans l'unité de transmission optique centrale (60), le signal d'attaque radar optique (6) constitué d'un signal porteur radar comportant une fréquence f_{carrier} et d'un signal de rampe radar comportant la fréquence fᵣₐₘₚ est généré en modulant ceux-ci sur un signal porteur optique comportant une fréquence porteuse déterminée, dans lequel le signal porteur radar optique et le signal de rampe radar présentent une fréquence qui ne correspond qu'à une fraction d'une fréquence porteuse électrique nécessaire pour le fonctionnement du transmetteur radar (14),
dans lequel l'au moins une unité de transmission radar (3-1, 3-2, 3-3, 3-n) comprend une unité de multiplication (12), dans lequel, dans l'unité de transmission radar (3-1, 3-2, 3-3, 3-4), le signal d'attaque radar optique (6) est converti en un signal électrique au moyen de l'unité de réception optique (9) et, au moyen de l'unité de multiplication (12), le signal électrique est multiplié en un signal d'attaque radar électrique (21) comportant la fréquence porteuse électrique nécessaire et fourni pour le transmetteur radar (14).

2. Système radar (1) selon la revendication 1, **caractérisé en ce que** le signal porteur optique présente une longueur d'onde de 1 300 nm ou de 1 550 nm.

3. Système radar (1) selon la revendication 1 ou 2, **caractérisé en ce que** l'unité de réception optique (9) de l'au moins une unité de transmission radar (3-1, 3-2, 3-3, 3-n) comprend une photodiode (10).

4. Système radar (1) selon l'une des revendications précédentes, **caractérisé en ce que** l'unité de transmission optique centrale (60) comprend une diode laser (61) et un modulateur (62) pour la fourniture du signal d'attaque radar optique (6).

5. Système radar (1) selon la revendication 4, **caractérisé en ce qu'**une tension de polarisation du modulateur (62) est choisie de telle sorte qu'elle produit une modulation à deux bandes latérales à signal porteur optique supprimé.

6. Système radar (1) selon l'une des revendications précédentes, **caractérisé en ce que** le système radar (1) comprend au moins une autre unité de transmission radar (3-1, 3-2, 3-3, 3-n) et/ou au moins une autre unité de réception radar (4-1, 4-2, 4-3, 4-n), dans lequel l'au moins une autre unité de transmission radar (3-1, 3-2, 3-3, 3-n) et/ou l'au moins une autre unité de réception radar (4-1, 4-2, 4-3, 4-n) sont connectées, au moins dans certaines sections, à l'unité centrale (2) par l'intermédiaire de la même fibre optique (5) que celle de l'au moins une unité de transmission radar (3-1, 3-2, 3-3, 3-n) et de l'au moins une unité de réception radar (4-1, 4-2, 4-3, 4-n).

7. Système radar (1) selon la revendication 6, **caractérisé en ce qu'**une bande passante de la fibre optique (5) est divisée par un procédé de multiplexage par répartition en longueur d'onde et/ou un procédé de multiplexage par répartition dans le temps.

8. Procédé permettant de faire fonctionner un système radar (1), comprenant les étapes suivantes :
génération et fourniture d'un signal d'attaque radar optique (6) au moyen d'une unité de transmission optique centrale (60) d'une unité centrale,
transfert du signal d'attaque radar optique (6) à au moins une unité de transmission radar (3-1, 3-2, 3-3, 3-n) au moyen d'au moins une fibre optique (5),
réception du signal d'attaque radar optique (6) et conversion du signal d'attaque radar optique (6) en un signal d'attaque radar électrique (21) au moyen d'une unité de réception optique (9) de l'au moins une unité de transmission radar (3-1, 3-2, 3-3, 3-n), entraînement du transmetteur radar (14) de l'unité de transmission radar (3-1, 3-2, 3-3, 3-n) avec le signal d'attaque radar électrique (21),
réception d'un signal d'écho radar (43) au moyen d'un récepteur radar (34) d'une unité de réception radar (4-1, 4-2, 4-3, 4-n),
mélange du signal d'écho radar (43) reçu avec le signal d'attaque radar électrique (42) dans un mélangeur (33) de l'unité de réception radar (4-1, 4-2, 4-3, 4-n),
modulation du signal mélangé sur le signal d'attaque radar optique (6) au moyen d'une unité de modulation (38) de l'unité de réception radar (4-1, 4-2, 4-3, 4-n),
transfert du signal modulé (7) à l'unité centrale (2) par l'intermédiaire de l'au moins une fibre optique (5),
réception du signal modulé (7) au moyen d'une unité de réception optique centrale (64) de l'unité centrale (2),
évaluation du signal modulé (7) reçu au moyen d'une unité d'évaluation (65) de l'unité centrale (2),
émission en sortie d'informations radar (8) dérivées de celui-ci,
**caractérisé en ce que**
dans l'unité de transmission optique centrale (60), le signal d'attaque radar optique (6) constitué d'un signal porteur radar comportant une fréquence f_{carrier} et d'un signal de rampe radar comportant la fréquence fᵣₐₘₚ est généré en modulant ceux-ci sur un signal porteur optique comportant une fréquence porteuse déterminée, dans lequel le signal porteur radar optique et le signal de rampe radar présentent une fréquence qui ne correspond qu'à une fraction d'une fréquence porteuse électrique nécessaire pour le fonctionnement du transmetteur radar (14),
dans lequel l'au moins une unité de transmission radar (3-1, 3-2, 3-3, 3-n) comprend une unité de multiplication (12), dans lequel, dans l'unité de transmission radar (3-1, 3-2, 3-3, 3-4), le signal d'attaque radar optique (6) est converti en un signal électrique au moyen de l'unité de réception optique (9) et, au moyen de l'unité de multiplication (12), le signal électrique est multiplié en un signal d'attaque radar électrique (21) comportant la fréquence porteuse électrique nécessaire et fourni pour le transmetteur radar (14).

9. Unité centrale (2) destinée à être utilisée dans un système radar (1) selon l'une des revendications 1 à 7,
dans laquelle l'unité centrale (2) comprend une unité de transmission optique centrale (60) qui est configurée pour fournir un signal d'attaque radar optique (6) et pour le coupler dans au moins une fibre optique (5), et
dans laquelle l'unité centrale (2) comprend en outre une unité de réception optique centrale (64) et une unité d'évaluation (65), dans laquelle l'unité d'évaluation (65) est configurée pour évaluer un signal modulé (7) reçu par l'unité de réception optique centrale (64) et pour émettre en sortie des informations radar (8) dérivées de celui-ci,
**caractérisée en ce que**
dans l'unité de transmission optique centrale (60), le signal d'attaque radar optique (6) constitué d'un signal porteur radar comportant une fréquence f_{carrier} et d'un signal de rampe radar comportant la fréquence fᵣₐₘₚ est généré en modulant ceux-ci sur un signal porteur optique comportant une fréquence porteuse déterminée, dans lequel le signal porteur radar optique et le signal de rampe radar présentent une fréquence qui ne correspond qu'à une fraction d'une fréquence porteuse électrique nécessaire pour le fonctionnement du transmetteur radar (14):

10. Unité de transmission radar (3-1, 3-2, 3-3, 3-n) destinée à être utilisée dans un système radar (1) selon l'une des revendications 1 à 7, comprenant :
une unité de réception optique (9) et
un transmetteur radar (14),
dans laquelle l'unité de réception optique (9) est configurée pour recevoir le signal d'attaque radar optique (6) comportant une fréquence par l'intermédiaire d'une fibre optique (5) et pour le convertir en un signal d'attaque radar électrique (21) et pour le fournir pour l'entraînement du transmetteur radar (14),
dans laquelle l'au moins une unité de transmission radar (3-1, 3-2, 3-3, 3-n) comprend une unité de multiplication (12), dans laquelle, dans l'unité de transmission radar (3-1, 3-2, 3-3, 3-4), le signal d'attaque radar optique (6) est converti en un signal électrique au moyen de l'unité de réception optique (9) et, au moyen de l'unité de multiplication (12), le signal électrique est multiplié en un signal d'attaque radar électrique (21) comportant la fréquence porteuse électrique nécessaire et fourni pour le transmetteur radar (14).

11. Unité de réception radar (4-1, 4-2, 4-3, 4-n) destinée à être utilisée dans un système radar (1) selon l'une des revendications 1 à 7, comprenant :
un récepteur radar (34),
un mélangeur (33), et
une unité de modulation (38),
dans laquelle le mélangeur (33) est configuré pour mélanger un signal d'écho radar (43) reçu par le récepteur radar (34) avec un signal d'attaque radar électrique (42), et dans laquelle l'unité de modulation (38) est configurée pour moduler le signal mélangé sur un signal d'attaque radar optique (6) reçu et pour le coupler dans une fibre optique (5).
